(19) Europäisches Patentamt
European Patent Office
Office européen des brevets

(11) EP 4 636 008 A1

(12) **EUROPEAN PATENT APPLICATION**

(43) Date of publication:
**22.10.2025 Bulletin 2025/43**

(21) Application number: **24315174.3**

(22) Date of filing: **15.04.2024**

(51) International Patent Classification (IPC):
***C08G 63/127*** *(2006.01)* ***C08G 63/137*** *(2006.01)*
***C08G 63/183*** *(2006.01)* ***C08G 63/199*** *(2006.01)*
***C09D 167/02*** *(2006.01)* ***C08G 18/42*** *(2006.01)*
***C08G 18/75*** *(2006.01)*

(52) Cooperative Patent Classification (CPC):
(C-Sets available)
**C08G 63/127; C08G 18/4027; C08G 18/4202; C08G 18/4211; C08G 18/423; C08G 18/542; C08G 18/755; C08G 63/137; C08G 63/183; C08G 63/199; C09D 167/02; C09D 175/06** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Eastman Chemical Company**
**Kingsport, TN 37660 (US)**

(72) Inventors:
- **Chang, Kuo-Hsiang**
  **Kingsport, TN 37660 (US)**
- **Brown, Cameron Lee**
  **Kingsport, TN 37660 (US)**
- **Cagnard, Alain Michel**
  **Kingsport, TN 37660 (US)**
- **Feng, Linqian**
  **Kingsport, TN 37660 (US)**
- **Puaud, Samuel Jean**
  **92977 Paris La Defense Cedex (FR)**
- **Knockaert, Pierre Claude Victor**
  **9052 Oost-Vlaanderen (BE)**

(74) Representative: **Cabinet Beau de Loménie**
**103, rue de Grenelle**
**75340 Paris Cedex 07 (FR)**

(54) **METAL CAN FOR A FOOD OR BEVERAGE PRODUCT**

(57) A metal can for food, wherein at least a part of the surface is coated with a coating composition comprising: (a) a polyester polyol in an amount of 55-90 wt.%; (b) a modifying polyester in an amount of 1-20 wt.%; and (c) isophorone diisocyanate (IPDI) in an amount of 5-40 wt.%, all wt.% are based on the total weight of (a), (b), (c), and (d).

EP 4 636 008 A1

(52) Cooperative Patent Classification (CPC): (Cont.)

C-Sets
**C09D 167/02, C08L 67/00**

## Description

TECHNICAL FIELD

Embodiments of the present disclosure generally relate to metal cans for use with a food or beverage product, and more particularly, relate to metal cans for use with a food or beverage product having at least a portion of the surface coated with a composition.

## BACKGROUND

Metal containers are commonly used for food and beverage packaging. The containers are typically made of steel or aluminum. Prolonged contact between the metal and the filled product can lead to corrosion of the container. To prevent direct contact between filled product and metal, a coating is typically applied to the interior of the food and beverage cans. In order to be effective, such a coating must have adequate properties that are needed for protecting the packaged products, such as adhesion, corrosion resistance, chemical resistance, flexibility, stain resistance, and hydrolytic stability. Moreover, the coating must be able to withstand processing conditions during can fabrication and food sterilization. Coatings based on a combination of epoxy and phenolic resins are known to be able to provide a good balance of the required properties and are most widely used. However, some industry sectors are moving away from food contact polymers made with bisphenol A (BPA), a basic building block of epoxy resins.

Polyester resins are of particular interest to the coating industry to be used as a replacement for epoxy resin because of their comparable properties, such as flexibility and adhesion. It is known by one skilled in the art that crosslinking between common polyester and phenolic resin is too poor to provide adequate properties for use in interior can coatings. Specifically, conventional polyesters having hydroxyl functionalities are not reactive enough with phenolic resins under curing conditions to provide adequate cross-linking density, resulting in a coating that lacks good solvent resistance.

2,2,4,4-Tetramethyl-1,3-cyclobutanediol (TMCD) is a cycloaliphatic compound that can be used as a diol component for making polyesters. Thermoplastics based on TMCD polyesters can exhibit exceptional impact resistance owing to TMCD's unique structure. TMCD can also provide good hydrolytic stability of the polyester due to its secondary hydroxyl functionality. Both of these properties are highly desirable in thermosetting coatings.

Coatings based on TMCD polyesters have been considered as replacements for epoxy resins for interior can coating application. Prior efforts have been directed to coating systems based on high Tg, mid-molecular weight TMCD polyesters with slight crosslinking in order to withstand processing conditions during can fabrication. Such systems, however, have been found to have shortcomings in some of the desired properties such as corrosion resistance, retort resistance, and crazing (microcracking) resistance. Higher crosslinking can lead to improved coating properties, such as corrosion resistance, acid resistance, stain resistance, and retort resistance. Such coatings, however, tend to be less flexible, which can have detrimental effects on crazing resistance and bending ability during processing.

Accordingly, there remains a need for a non-BPA containing coatings for use in interior can coatings that can provide a good balance of the desirable coating properties for protecting packaged products, such as adhesion, corrosion resistance, chemical resistance, flexibility, stain resistance, and hydrolytic stability, as well as being able to withstand processing conditions during can fabrication and food sterilization.

## SUMMARY

Disclosed in embodiments herein are metal cans for food or beverage products. The metal cans have a surface and at least a portion of the surface is coated with a coating composition comprising: (a). a polyester polyol in an amount of 55-90 wt.%, based on the total weight of (a), (b), (c), and (d), wherein the polyester polyol is the reaction product of the monomers selected from the group consisting of: i. 2,2,4,4-Tetramethyl-1,3-cyclobutanediol (TMCD) in an amount of 25 to 60 mol.%, based on the total moles of (a)(i-iii), ii. a diol other than TMCD in an amount of 35 to 70 mol.%, based on the total moles of (a)(i-iii), iii. trimethylolpropane (TMP) in an amount of 0 to 5 mol.%, based on the total moles of (a)(i-iii), iv. terephthalic acid (TPA) in an amount of 0-55 mol.%, based on the total moles of (a)(iv-vi), v. isophthalic acid (IPA) in an amount of 30-80 mol.%, based on the total moles of (a)(iv-vi), and vi. an aliphatic diacid in an amount of 0-35 mol.%, based on the total moles of (a)(iv-vi); b. a modifying polyester in an amount of 1-20 wt.%, based on the total weight of (a), (b), (c), and (d), wherein the modifying polyester is the reaction product of the monomers selected from the group consisting of: i. TMCD in an amount of 5-38 mol.%, based on the total moles of (b)(i-iii), ii. a diol in an amount of 20-70 mol.%, based on the total moles of (b)(i-iii), iii. trimethylolpropane (TMP) in an amount of 5-50 mol.%, based on the total moles of (b)(i-iii), iv. an acyclic aliphatic diacid in an amount of 60-100 mol.%, based on the total moles of (b)(iv-v), and v. isophthalic acid (IPA) in an amount of 0-40 mol.%, based on the total moles of (b)(iv-v); c. isophorone diisocyanate (IPDI) in an amount of 5-40 wt.% based on the total weight of (a), (b), (c), and (d); and d. an amino resin in an amount of 0-40 wt.%, based on the total weight

of (a), (b), (c), and (d); wherein the polyester polyol (a) has a glass transition temperature (Tg) of 50 to 110 °C, acid number of 0 to 10 mgKOH/g, hydroxyl number of 8 to 40 mgKOH/g, number average molecular weight of 5,000 to 20,000 mgKOH/g, and weight average molecular weight of 10,000 to 100,000; and wherein the modifying polyester (b) has a glass transition temperature (Tg) of -50 to - 10 °C, acid number of 0 to 15 mgKOH/g, hydroxyl number of 50 to 300 mgKOH/g, number average molecular weight of 1,000 to 5,000 g/mole, and weight average molecular weight of 5,000 to 50,000 g/mole.

Further disclosed in embodiments herein are metal cans for food or beverage products. The metal cans have a surface and at least a portion of the surface is coated with a coating composition comprising: (a), a polyester polyol in an amount of 65-80 wt.%, based on the total weight of (a), (b), (c), and (d), wherein the polyester polyol is the reaction product of the monomers selected from the group consisting of: i. 2,2,4,4-Tetramethyl-1,3-cyclobutanediol (TMCD) in an amount of 25 to 60 mol.%, based on the total moles of (a)(i-iii), ii. a diol other than TMCD selected from the group consisting of 2-methyl-1,3-propanediol (MPdiol), 1,3-cyclohexanedimethanol, 1,4-cyclohexanedimethanol (CHDM), 1,6-hexanediol, and mixtures thereof in an amount of 35 to 75 mol.%, based on the total moles of (a)(i-iii), iii. trimethylolpropane (TMP) in an amount of 1 to 5 mol.%, based on the total moles of (a)(i-iii), iv. terephthalic acid (TPA) in an amount of 0-55 mol.%, based on the total moles of (a)(iv-vi), v. isophthalic acid (IPA) in an amount of 30-80 mol.%, based on the total moles of (a)(iv-vi), and vi. an aliphatic diacid selected from the group consisting of sebacic acid, adipic acid, 1,4-cyclohexanedicarboxylic acid and mixtures thereof in an amount of 0-35 mol.%, based on the total moles of (a)(iv-vi); b. a modifying polyester in an amount of 3-10 wt.%, based on the total weight of (a), (b), (c), and (d), which is the reaction product of the monomers comprising: i. TMCD in an amount of 5-38 mol.%, based on the total moles of (b)(i-iii), ii. a diol selected from the group consisting of 1,3-cyclohexanedimethanol, 1,4-cyclohexanedimethanol (CHDM), neopentyl glycol (NPG), 2-methyl-1,3-propanediol (MPdiol), and mixtures thereof in an amount of 20-50 mol.%, based on the total moles of (b)(i-iii), iii. trimethylolpropane (TMP) in an amount of 5-50 mol.%, based on the total moles of (b)(i-iii), iv. an acyclic aliphatic diacid, which is adipic acid, sebacic acid, or a mixture thereof in an amount of 60-100 mol.%, based on the total moles of (b)(iv-v), and v. isophthalic acid (IPA) in an amount of 0-40 mol.%, based on the total moles of (b)(iv-v); (c) isophorone diisocyanate (IPDI) in an amount of 15-30 wt.% based on the total weight of (a), (b), (c), and (d); and d. a benzoguanamine formaldehyde resin in an amount of 0-40 wt.%, based on the total weight of (a), (b), (c), and (d); wherein the polyester polyol (a) has a glass transition temperature (Tg) of 50 to 110 °C, acid number of 0 to 10 mgKOH/g, hydroxyl number of 8 to 40 mgKOH/g, number average molecular weight of 5,000 to 20,000 mgKOH/g, and weight average molecular weight of 10,000 to 100,000; and wherein the modifying polyester (b) has a glass transition temperature (Tg) of -50 to -10 °C, acid number of 0 to 15 mgKOH/g, hydroxyl number of 50 to 300 mgKOH/g, number average molecular weight of 1,000 to 5,000 g/mole, and weight average molecular weight of 5,000 to 50,000 g/mole.

Further disclosed in embodiments herein are methods of manufacturing metal cans for food or beverage products. The methods comprise: providing a metal sheet, can part, or can; applying a coating composition to the metal sheet, can part, or can; and drying or curing the coating composition to form a coated metal sheet, can part or can; wherein the coating composition comprises (a), a polyester polyol in an amount of 55-90 wt.%, based on the total weight of (a), (b), (c), and (d), wherein the polyester polyol is the reaction product of the monomers selected from the group consisting of: i. 2,2,4,4-Tetramethyl-1,3-cyclobutanediol (TMCD) in an amount of 25 to 60 mol.%, based on the total moles of (a)(i-iii), ii. a diol other than TMCD in an amount of 35 to 70 mol.%, based on the total moles of (a)(i-iii), iii. trimethylolpropane (TMP) in an amount of 0 to 5 mol.%, based on the total moles of (a)(i-iii), iv. terephthalic acid (TPA) in an amount of 0-55 mol.%, based on the total moles of (a)(iv-vi), v. isophthalic acid (IPA) in an amount of 30-80 mol.%, based on the total moles of (a)(iv-vi), and vi. an aliphatic diacid in an amount of 0-35 mol.%, based on the total moles of (a)(iv-vi); b. a modifying polyester in an amount of 1-20 wt.%, based on the total weight of (a), (b), (c), and (d), wherein the modifying polyester is the reaction product of the monomers selected from the group consisting of: i. TMCD in an amount of 5-38 mol.%, based on the total moles of (b)(i-iii), ii. a diol in an amount of 20-70 mol.%, based on the total moles of (b)(i-iii), iii. trimethylolpropane (TMP) in an amount of 5-50 mol.%, based on the total moles of (b)(i-iii), iv. an acyclic aliphatic diacid in an amount of 60-100 mol.%, based on the total moles of (b)(iv-v), and v. isophthalic acid (IPA) in an amount of 0-40 mol.%, based on the total moles of (b)(iv-v); c. isophorone diisocyanate (IPDI) in an amount of 5-40 wt.% based on the total weight of (a), (b), (c), and (d); and d. an amino resin in an amount of 0-40 wt.%, based on the total weight of (a), (b), (c), and (d); wherein the polyester polyol (a) has a glass transition temperature (Tg) of 50 to 110 °C, acid number of 0 to 10 mgKOH/g, hydroxyl number of 8 to 40 mgKOH/g, number average molecular weight of 5,000 to 20,000 mgKOH/g, and weight average molecular weight of 10,000 to 100,000; and wherein the modifying polyester (b) has a glass transition temperature (Tg) of -50 to -10 °C, acid number of 0 to 15 mgKOH/g, hydroxyl number of 50 to 300 mgKOH/g, number average molecular weight of 1,000 to 5,000 g/mole, and weight average molecular weight of 5,000 to 50,000 g/mole.

Additional features and advantages of the embodiments will be set forth in the detailed description which follows, and in part will be readily apparent to those skilled in the art from that description or recognized by practicing the embodiments described herein. It is to be understood that both the foregoing and the following description describe various embodiments and are intended to provide an overview or framework for understanding the nature and character of the claimed subject matter.

## DETAILED DESCRIPTION

Reference will now be made in detail to embodiments of metal cans, and methods of manufacturing thereof. The metal cans may be used to hold for food or beverage products; however, that this is merely an illustrative implementation of the embodiments disclosed herein. The embodiments are applicable to other technologies that are susceptible to similar problems as those discussed above.

In embodiments herein, the metal can has a surface and at least a portion of the surface is coated with a coating composition. The method of manufacturing metal cans for food or beverage products comprise: providing a metal sheet, can part, or can; applying a coating composition to a metal sheet, can part, or can; and drying the coating composition to form a coated metal sheet, can part or can. The coating composition, which is further described herein, generally comprises (a) a polyester polyol, (b) a modifying polyester, (c) isophorone diisocyanate (IPDI), and (d) optionally, an amino resin.

### Polyester Polyol

The polyester polyol is present in the coating composition in an amount of 55-90 wt.%, based on the total weight of components (a), (b), (c), and (d). All individual values and subranges are included and disclosed herein. For example, in some embodiments, the polyester polyol is present in the coating composition in an amount of from a lower limit of 55, 57.5, 60, 62.5, 65, 67.5, or 70 wt.% to an upper limit of 90, 87.5, 85, 82.5, or 80 wt.%, based on the total weight of components (a), (b), (c), and (d). In other embodiments, the polyester polyol is present in the coating composition in an amount of 55-87.5, 55-85, 55-82.5, or 55-80 wt.%, based on the total weight of components (a), (b), (c), and (d). In further embodiments, the polyester polyol is present in the coating composition in an amount of 60-90, 62.5-90, 65-90, 67.5-90, or 70-90 wt.%, based on the total weight of components (a), (b), (c), and (d). In even further embodiments, the polyester polyol is present in the coating composition in an amount of 62.5-87.5, 62.5-85, 65-85, 65-80, or 67.5-80 wt.%, based on the total weight of components (a), (b), (c), and (d).

The polyester polyol is the reaction product of polyhydric alcohols and polybasic acids. In embodiments herein, the polyester polyol is the reaction product of monomers selected from the group consisting of: (i) 2,2,4,4-Tetramethyl-1,3-cyclobutanediol (TMCD), (ii) a diol other than TMCD, (iii) optionally, trimethylolpropane (TMP), (iv) optionally, terephthalic acid (TPA), (v) isophthalic acid (IPA, and (vi) optionally, an aliphatic diacid. Monomers (i)-(iii) are polyhydric alcohols and therefore the amount of these monomers are based on the total moles of (i)-(iii). Monomers (iv)-(vi) are polybasic acids and therefore the amount of these monomers are based on the total moles of (iv)-(vi).

In embodiments herein, TMCD (a)(i) is present in the polyester polyol in an amount of 25 to 60 mol.%, based on the total moles of (i)-(iii). All individual values and subranges are included and disclosed herein. For example, in some embodiments, TMCD (a)(i) may be present in the polyester polyol in an amount of 30 to 60, 35 to 60, 37.5 to 60, 40 to 60, 42.5 to 60 or 45 to 60 mol.%, based on the total moles of (i)-(iii). In other embodiments, TMCD (a)(i) may be present in the polyester polyol in an amount of 25 to 57.5, 25 to 55, 25 to 52.5, 25 to 50 or 25 to 47.5 mol.%, based on the total moles of (i)-(iii). In further embodiments, TMCD (a)(i) may be present in the polyester polyol in an amount of 30 to 57.5, 35 to 55, 35 to 52.5, 35 to 50, or 40 to 50 mol.%, based on the total moles of (i)-(iii).

In embodiments herein, diols other than TMCD (a)(ii) have 2 hydroxyl groups and can be branched or linear, saturated or unsaturated, aliphatic or cycloaliphatic C2-C20 compounds, the hydroxyl groups being primary, secondary, and/or tertiary. Examples of diols (a)(ii) may include 2,2-dimethyl-1,3-propanediol (neopentyl glycol), 1,2-cyclohexanedimethanol, 1,3-cyclohexanedimethanol, 1,4-cyclohexanedimethanol, 2,2,4-trimethyl-1,3 -pentanediol, hydroxypivalyl hydroxypivalate, 2-methyl-1,3-propanediol, 2-butyl-2-ethyl-1,3-propanediol, 2-ethyl-2-isobutyl-1,3-propanediol, 1,3-butanediol, 1,4-butanediol, 1,5-pentanediol, 1,6-hexanediol, 2,2,4,4-tetramethyl-1,6-hexanediol, 1,10-decanediol, 1,4-benzenedimethanol, ethylene glycol, propylene glycol, diethylene glycol, dipropylene glycol, triethylene glycol, tetraethylene glycol, polyethylene glycol, and 2,2-bis(hydroxymethyl)propionic acid (dimethylolpropionic acid).

In some embodiments, the diol other than TMCD (a)(ii) is selected from the group consisting of 1,2-cyclohexanedimethanol, 1,3-cyclohexanedimethanol, 1,4-cyclohexanedimethanol (CHDM), neopentyl glycol (NPG), 2-methyl-1,3-propanediol (MPdiol), 1,6-hexanediol, and mixtures thereof. In other embodiments, the diol other than TMCD (a)(ii) is selected from the group consisting of 2-methyl-1,3-propanediol (MPdiol), 1,3-cyclohexanedimethanol, 1,4-cyclohexanedimethanol (CHDM), 1,6-hexanediol, and mixtures thereof. In further embodiments, the diol other than TMCD (a)(ii) is selected from the group consisting of 2-methyl-1,3-propanediol (MPdiol), 1,4-cyclohexanedimethanol (CHDM), 1,6-hexanediol, and mixtures thereof.

In embodiments herein, the diol other than TMCD (a)(ii) may be present in the polyester polyol in an amount of 35 to 75 mol.%, based on the total moles of (i)-(iii). All individual values and subranges are included and disclosed herein. For example, in some embodiments, the diol other than TMCD (a)(ii) may be present in the polyester polyol in an amount of from a lower limit of 35, 37.5, 40, 42.5, 45, 47.5 50, or 52.5 to an upper limit of 75, 72.5, 70, 67.5, 65, 62.5, 60, 57.5 or 55 mol.%, based on the total moles of (i)-(iii). In other embodiments, the diol other than TMCD (a)(ii) may be present in the

polyester polyol in an amount of 35 to 70, 40 to 70, 45 to 70, 40 to 65, 45 to 65 or 45 to 60 mol.%, based on the total moles of (i)-(iii).

In embodiments herein, TMP (a)(iii) may be present in the polyester polyol in an amount of 0 to 5 mol.%, based on the total moles of (i)-(iii). All individual values and subranges are included and disclosed herein. For example, in some embodiments, the TMP (a)(iii) may be present in the polyester polyol in an amount of from a lower limit of 0, greater than 0, 0.25, 0.5, 0.75, 1, 1.5, or 2 to an upper limit of 5, 4.75, 4.5, 4.25, 4, 3.75, 3.5, 3.25, 3 or 2.5 mol.%, based on the total moles of (i)-(iii). In other embodiments, the TMP (a)(iii) may be present in the polyester polyol in an amount of from 0 to 4, 0 to 3, 0 to 2, greater than 0 to 5, 0.5 to 5, 1 to 5, or 1.5 to 5 mol.%, based on the total moles of (i)-(iii). In further embodiments, the TMP (a)(iii) may be present in the polyester polyol in an amount of from greater than 0 to 4.75, 0.25 to 4.75, 0.5 to 4.5, 0.75 to 4.25, 0.75 to 4, 1 to 4, or 1 to 3 mol.%, based on the total moles of (i)-(iii).

In embodiments herein, TPA (a)(iv) may be present in the polyester polyol in an amount of 0 to 55 mol.%, based on the total moles of (iv)-(vi). All individual values and subranges are included and disclosed herein. For example, in some embodiments, the TPA (a)(iv) may be present in the polyester polyol in an amount of from a lower limit of 0, greater than 0, 5, 10, 15, 20, 25, or 30 to an upper limit of 55, 50, 47.5, 45, 42.5, 40, 37.5, or 35 mol.%, based on the total moles of (iv)-(vi). In other embodiments, the TPA (a)(iv) may be present in the polyester polyol in an amount of from greater than 0 to 55, 5 to 55, 10 to 55, 15 to 55, 20 to 55, 20 to 50, 25 to 55, 25 to 50, or 25 to 45 mol.%, based on the total moles of (iv)-(vi). In further embodiments, the TPA (a)(iv) may be present in the polyester polyol in an amount of from greater than 0 to 50, 5 to 50, 10 to 50, 10 to 45, 10 to 40, 15 to 40, or 20 to 40 mol.%, based on the total moles of (iv)-(vi).

IPA includes isophthalic acid and its esters such as dimethyl isophthalate. In embodiments herein, IPA (a)(iv) may be present in the polyester polyol in an amount of 30 to 80 mol.%, based on the total moles of (iv)-(vi). All individual values and subranges are included and disclosed herein. For example, in some embodiments, the IPA (a)(iv) may be present in the polyester polyol in an amount of from a lower limit of 30, 35, 40, 45, 50, 55, 60, 65, or 70 to an upper limit of 80, 75, 70, 65, 60, 55, 50, 45, or 40 mol.%, based on the total moles of (iv)-(vi). In other embodiments, the IPA (a)(iv) may be present in the polyester polyol in an amount of from 30 to 75, 35 to 75, 40 to 75, 45 to 75, 50 to 75, or 55 to 75 mol.%, based on the total moles of (iv)-(vi). In further embodiments, the IPA (a)(iv) may be present in the polyester polyol in an amount of from 35 to 80, 40 to 80, 45 to 80, 50 to 80, or 40 to 70 mol.%, based on the total moles of (iv)-(vi).

In embodiments herein, examples of suitable aliphatic diacids may include, but are not limited to includes C4-C12 diacids, such as succinic acid, adipic acid, sebacic acid, dodecanedioic acid, 1,4-cyclohexanedicarboxylic acid (1,4-CHDA), 1,3-cyclohexanedicarboxylic acid (1,3-CHDA), and their esters or methyl esters. In some embodiments, the aliphatic diacid (a)(vi) is selected from the group consisting of sebacic acid, adipic acid, 1,4-cyclohexanedicarboxylic acid, and mixtures thereof.

In embodiments herein, an aliphatic diacid (a)(vi) may be present in the polyester polyol in an amount of 0 to 35 mol.%, based on the total moles of (iv)-(vi). All individual values and subranges are included and disclosed herein. For example, in some embodiments, the aliphatic diacid (a)(vi) may be present in the polyester polyol in an amount of from a lower limit of 0, greater than 0, 1, 2.5, 5, 10, 15, 20, 25, or 30 to an upper limit of 35, 32.5, 30, 27.5, 25, 22.5, 20, 15, 10 or 5 mol.%, based on the total moles of (iv)-(vi). In other embodiments, the aliphatic diacid (a)(iv) may be present in the polyester polyol in an amount of from 0 to 30, 0 to 25, greater than 0 to 35, greater than 0 to 30, greater than 0 to 25, 1 to 35, 1 to 30, 1 to 25, 5 to 35, 10 to 35, 20 to 35, or 25 to 35 mol.%, based on the total moles of (iv)-(vi). In further embodiments, the aliphatic diacid (a)(vi) is selected from the group consisting of sebacic acid, adipic acid, 1,4-cyclohexanedicarboxylic acid, and mixtures thereof, in an amount of 0 to 35, 0 to 30, 0 to 25, greater than 0 to 35, greater than 0 to 30, greater than 0 to 25, 1 to 35, 1 to 30, 1 to 25, 5 to 35, 10 to 35, 20 to 35, or 25 to 35 mol.%, based on the total moles of (iv)-(vi).

All combinations of monomers (a)(i-vi) are included and disclosed herein. By way of example only, the polyester polyol is the reaction product of the monomers selected from the group consisting of: TMCD (a)(i) in an amount of 35-50 mol.%, said diol other than TMCD (a)(ii) in an amount of 45-60 mol.%, TMP (a)(iii) in an amount of 1-3 mol.% based on the total moles of (a)(i-iii), TPA (a)(iv) in an amount of 25-45 mol.% based on the total moles of (b)(iv-vi), IPA (a)(v) in an amount of 40-70 mol.% based on the total moles of (b)(iv-vi), and the aliphatic diacid (a)(vi) in an amount of 0-25 mol.% based on the total moles of (a)(iv-vi).

In embodiments herein, the polyester polyol (a) has a glass transition temperature (Tg) of 50 to 110 °C, an acid number of 0 to 10 mgKOH/g, a hydroxyl number of 8 to 40 mgKOH/g, a number average molecular weight of 5,000 to 20,000 g/mol, and a weight average molecular weight of 10,000 to 100,000 g/mol. All individual values and subranges are included and disclosed herein. For example, in some embodiments, the polyester polyol (a) has a glass transition temperature (Tg) of 55 to 110, 60 to 110, 70 to 110, or 75 to 110 °C; an acid number of 1 to 10, 2 to 10, or 3 to 10 mgKOH/g; a hydroxyl number of 10 to 40, 12 to 40, or 15 to 40 mgKOH/g; a number average molecular weight of 6,000 to 20,000, 7,000 to 20,000, 8,500 to 20,000, or 9,000 to 20,000 g/mol; and a weight average molecular weight of 20,000 to 100,000, 25,000 to 100,000, 30,000 to 100,000, or 35,000 to 100,000 g/mol. In other embodiments, the polyester polyol (a) has a glass transition temperature (Tg) of 50 to 105, 55 to 100, 60 to 105, 60 to 100, 60 to 95, 70 to 105, or 75 to 105 °C; an acid number of 0 to 9, 0 to 8, 0 to 7, 0 to 6, 0 to 5, 0 to 4, 1 to 9, 1 to 8, 1 to 7, 1 to 6, 1 to 5, 1 to 4, 2 to 9, 2 to 8, 2 to 6, 2 to 5, 2 to 4, 3 to 6, 3 to 5, or 3 to 4 mgKOH/g; a hydroxyl number of 10 to 35, 12 to 35, 12 to 30, 12 to 27.5, 12 to 25, or 15 to 25 mgKOH/g; a number

average molecular weight of 6,000 to 18,000, 6,000 to 17,000, 6,500 to 16,000, 6,500 to 15,000, or 7,000 to 15,000 g/mol; and a weight average molecular weight of 20,000 to 90,000, 20,000 to 80,000, 20,000 to 75,000, 25,000 to 75,000, or 30,000 to 70,000 g/mol.

Modifying Polyester

In embodiments herein, the modifying polyester (b) is present in the coating composition in an amount of 1-20 wt.%, based on the total weight of components (a), (b), (c), and (d). All individual values and subranges are included and disclosed herein. For example, in some embodiments, the modifying polyester (b) is present in the coating composition in an amount of from a lower limit of 1, 1.5, 2, 2.5, 3, 3.5, 4, or 5 wt.% to an upper limit of 20, 17.5, 15, 12.5, 11, 10, 9, or 7.5 wt.%, based on the total weight of components (a), (b), (c), and (d). In other embodiments, the modifying polyester (b) is present in the coating composition in an amount of 1-17.5, 1-15, 1-12.5, 1-10, 2-17.5, 2-15, 2-12.5, 2-10, 3-17.5, 3-15, 3-12.5, 3-10, 4-17.5, 4-15, 4-12.5, or 4-10, wt.%, based on the total weight of components (a), (b), (c), and (d). In further embodiments, the modifying polyester (b) is present in the coating composition in an amount of 1-11, 2-11, 2-9, or 3-9 wt.%, based on the total weight of components (a), (b), (c), and (d). In even further embodiments, the modifying polyester (b) is present in the coating composition in an amount of 1.5-15, 1.5-12.5, 1.5-10, 2.5-15, 2.5-12.5, or 2.5-10 wt.%, based on the total weight of components (a), (b), (c), and (d).

In embodiments herein, the modifying polyester (b) is the reaction product of the monomers selected from the group consisting of (i) TMCD, (ii), a diol, (iii)TMP, (iv) an acyclic aliphatic diacid, and (v) optionally, IPA. The mol.% of monomers (i)-(iii) is based on the total moles of (i)-(iii). The mol.% of monomers (iv)-(v) are based on the total moles of (iv)-(v).

In embodiments herein, TMCD (b)(i) is present in the modifying polyester in an amount of 5 to 38 mol.%, based on the total moles of (i)-(iii). All individual values and subranges are included and disclosed herein. For example, in some embodiments, TMCD (b)(i) may be present in the modifying polyester in an amount of 7.5 to 38, 10 to 38, 12.5 to 38, 15 to 38, 17.5 to 38, or 20 to 38 mol.%, based on the total moles of (i)-(iii). In other embodiments, TMCD (b)(i) may be present in the modifying polyester in an amount of 7.5 to 37.5, 7.5 to 35, 10 to 37.5, 10 to 35, 12.5 to 37.5, 12.5 to 35, 15 to 37.5, 15 to 35, 17.5 to 37.5, 17.5 to 35, 20 to 37.5, or 20 to 35 mol.%, based on the total moles of (i)-(iii). In further embodiments, TMCD (b)(i) may be present in the modifying polyester in an amount of 7.5 to 32.5, 10 to 32.5, 12.5 to 32.5, 15 to 32.5, or 15 to 32 mol.%, based on the total moles of (i)-(iii).

The diols (b)(ii) described herein have 2 hydroxyl groups and can be branched or linear, saturated or unsaturated, aliphatic or cycloaliphatic C2-C20 compounds, the hydroxyl groups being primary, secondary, and/or tertiary. Examples of diols (ii) may include 2,2-dimethyl-1,3-propanediol (neopentyl glycol), 1,2-cyclohexanedimethanol, 1,3-cyclohexanedimethanol, 1,4-cyclohexanedimethanol, 2,2,4-trimethyl-1,3-pentanediol, hydroxypivalyl hydroxypivalate, 2-methyl-1,3-propanediol, 2-butyl-2-ethyl-1,3-propanediol, 2-ethyl-2-isobutyl-1,3-propanediol, 1,3-butanediol, 1,4-butanediol, 1,5-pentanediol, 1,6-hexanediol, 2,2,4,4-tetramethyl-1,6-hexanediol, 1,10-decanediol, 1,4-benzenedimethanol, ethylene glycol, propylene glycol, diethylene glycol, dipropylene glycol, triethylene glycol, tetraethylene glycol, polyethylene glycol, and 2,2-bis(hydroxymethyl)propionic acid (dimethylolpropionic acid). In some embodiments herein, the diol (b)(ii) is selected from the group consisting of 1,4-cyclohexanedimethanol, 1,3-cyclohexanedimethanol, 1,2-cyclohexanedimethanol, neopentyl glycol (NPG), 2-methyl-1,3-propanediol (MPdiol), 1,6-hexanediol, 1,4-butanediol, and mixtures thereof. In other embodiments herein, the diol (b)(ii) is selected from the group consisting of 1,3-cyclohexanedimethanol, 1,4-cyclohexanedimethanol (1,4-CHDM), neopentyl glycol (NPG), 2-methyl-1,3-propanediol (MPdiol), 1,6-hexanediol, and mixtures thereof. In further embodiments, the diol (b)(ii) is selected from the group consisting of 1,3-cyclohexanedimethanol, 1,4-cyclohexanedimethanol (1,4-CHDM), neopentyl glycol (NPG), 2-methyl-1,3-propanediol (MPdiol), and mixtures thereof. In even further embodiments, the diol (b)(ii) is selected from the group consisting of 1,4-cyclohexanedimethanol (1,4-CHDM), neopentyl glycol (NPG), 2-methyl-1,3-propanediol (MPdiol), and mixtures thereof.

The diol (b)(ii) may be present in the modifying polyester in an amount of 20 to 70 mol.%, based on the total moles of (i)-(iii). All individual values and subranges are included and disclosed herein. For example, in some embodiments, the diol (b)(ii) may be present in the modifying polyester in an amount of from a lower limit of 20, 22.5, 25, 27.5, 30, 35, 40, 45, or 50 to an upper limit of 70, 67.5, 65, 62.5, 60, 55, 50, 45, 40 or 35 mol.%, based on the total moles of (i)-(iii). In other embodiments, the diol (b)(ii) may be present in the modifying polyester in an amount of 25 to 65, 25 to 60, 25 to 55, 25 to 50, 25 to 45, 30 to 45, or 30 to 40 mol.%, based on the total moles of (i)-(iii). In further embodiments, the diol (b)(ii) may be present in the modifying polyester in an amount of 27.5 to 65, 45 to 70, or 50 to 70 mol.%, based on the total moles of (i)-(iii).

In embodiments herein, TMP (b)(iii) is present in the modifying polyester in an amount of 5 to 50 mol.%, based on the total moles of (i)-(iii). All individual values and subranges are included and disclosed herein. For example, in some embodiments, the TMP (b)(iii) may be present in the modifying polyester in an amount of from a lower limit of 5, 7.5, 10, 12.5, 15, 17.5 or 20 to an upper limit of 50, 47.5, 45, 42.5, or 40 mol.%, based on the total moles of (i)-(iii). In other embodiments, the TMP (b)(iii) may be present in the modifying polyester in an amount of from 5 to 45, 7.5 to 45, 10 to 45, 12.5 to 45, or 15 to 45 mol.%, based on the total moles of (i)-(iii). In further embodiments, the TMP (b)(iii) may be present in

the modifying polyester in an amount of from 5 to 42.5, 5 to 40, 7.5 to 40, 10 to 40, 12.5 to 40, or 15 to 40 mol.%, based on the total moles of (i)-(iii).

The acyclic aliphatic diacid (b)(iv) may be an open-chain aliphatic dicarboxylic acid compound, its diester derivative, its anhydride, or a combination thereof. Examples of acyclic aliphatic diacids may include C4-C12 diacids and their esters, such as adipic acid, maleic anhydride, maleic acid, fumaric acid, itaconic anhydride, itaconic acid, citraconic anhydride, citraconic acid, dodecanedioic acid, sebacic acid, azelaic acid, and the like. In some embodiments, the acyclic aliphatic diacid (b)(iv) is selected from the group consisting of adipic acid, sebacic acid, and a mixture thereof.

In embodiments herein, the acyclic aliphatic diacid (b)(iv) may be present in the modifying polyester in an amount of 60 to 100 mol.%, based on the total moles of (iv)-(v). All individual values and subranges are included and disclosed herein. For example, in some embodiments, the acyclic aliphatic diacid (b)(iv) may be present in the modifying polyester in an amount of from a lower limit of 60, 62.5, 65, 67.5, 70, 75, 80, 85, or 90 to an upper limit of 100, 97.5, 95, 90, 85, 80, 75, or 70 mol.%, based on the total moles of (iv)-(v). In other embodiments, the acyclic aliphatic diacid (b)(iv) may be present in the modifying polyester in an amount of from 62.5 to 100, 65 to 100, 67.5 to 100, 70 to 100, 72.5 to 100, 75 to 100, 77.5 to 100, or 80 to 100 mol.%, based on the total moles of (iv)-(v). In further embodiments, the acyclic aliphatic diacid (b)(iv) may be present in the modifying polyester in an amount of from 60 to 97.5, 60 to 95, 60 to 90, 60 to 85, or 60 to 80 mol.%, based on the total moles of (iv)-(v).

IPA includes isophthalic acid and its esters such as dimethyl isophthalate. In embodiments herein, IPA (b)(v) may be present in the modifying polyester in an amount of 0 to 40 mol.%, based on the total moles of (iv)-(v). All individual values and subranges are included and disclosed herein. For example, in some embodiments, the IPA (b)(v) may be present in the modifying polyester in an amount of from a lower limit of 0, greater than 0, 5, 10, 15, 20, 25, or 30 to an upper limit of 40, 37.5, 35, 32.5, 30, 27.5, 25, 22.5, or 20 mol.%, based on the total moles of (iv)-(v). In other embodiments, the IPA (b)(v) may be present in the modifying polyester in an amount of from 0 to 35, 0 to 30, 0 to 25, or 0 to 20 mol.%, based on the total moles of (iv)-(v). In further embodiments, the IPA (a)(iv) may be present in the modifying polyester in an amount of from greater than 0 to 40, 5 to 40, 5 to 35, 10 to 35, or 10 to 30 mol.%, based on the total moles of (iv)-(v).

All combinations of monomers (b)(i-v) are included and disclosed herein. By way of example only, the polyester polyol is the reaction product of the monomers selected from the group consisting of: TMCD (b)(i) in an amount of 15-32 mol.%, a diol (b)(ii) selected from the group consisting of 1,4-cyclohexanedimethanol, 1,3-cyclohexanedimethanol, 1,2-cyclohexanedimethanol, neopentyl glycol (NPG), 2-methyl-1,3-propanediol (MPdiol), 1,6-hexanediol, 1,4-butanediol, and mixtures thereof in an amount of 30-40 mol.%, TMP (b)(iii) in an amount of 15-40 mol.% based on the total moles of (b)(i-iii), acyclic aliphatic diacid (b)(iv) in an amount of 80-100 mol.% based on the total moles of (b)(iv-v), and IPA (b)(v) in an amount of 0-20 mol.% based on the total moles of (b)(iv-v).

In embodiments herein, the modifying polyester (b) has a glass transition temperature (Tg) of -50 to -10 °C, acid number of 0 to 15 mgKOH/g, hydroxyl number of 50 to 300 mgKOH/g, number average molecular weight of 1,000 to 5,000 g/mole, and weight average molecular weight of 5,000 to 50,000 g/mole. All individual values and subranges are included and disclosed herein. For example, in some embodiments, the modifying polyester (b) may have a glass transition temperature (Tg) of -45 to -10, -45 to -15, -45 to -20, -40 to -10, -40 to -15, or -40 to - 20 °C, acid number of 0 to 12.5, 0 to 10, 0 to 8, 0 to 7, 0 to 6, 1 to 15, 2 to 15, 3 to 15, or 5 to 15 mgKOH/g, hydroxyl number of 50 to 250, 50 to 200, 50 to 150, 60 to 300, 60 to 250, 60 to 200, 60 to 150, 70 to 300, 70 to 250, 70 to 200, 70 to 150, 80 to 300, 80 to 250, 80 to 200, or 80 to 150 mgKOH/g, number average molecular weight of 1,000 to 4,500, 1,000 to 4,000, 1,000 to 3,500, 1,000 to 3,000, 1,500 to 5,000, 1,500 to 4,500, 1,500 to 4,000, 1,500 to 3,500, 1,500 to 3,000, 2,000 to 5,000, 2,000 to 4,500, 2,000 to 4,000, 2,000 to 3,500, or 2,000 to 3,000 g/mole, and weight average molecular weight of 5,000 to 45,000, 5,000 to 40,000, 5,000 to 35,000, 5,000 to 30,000, 6,000 to 50,000, 6,000 to 45,000, 6,000 to 40,000, 6,000 to 35,000, 6,000 to 30,000, 7,000 to 50,000, 7,000 to 45,000, 7,000 to 40,000, 7,000 to 35,000, or 7,000 to 30,000 g/mole.

Isophorone Diisocyanate (IPDI)

The coating composition described herein comprises IPDI, which is used as a crosslinker. The isocyanate crosslinker, IPDI, may be blocked IPDI available from COVESTRO as Desmodur® BL 2078/2. In some embodiments herein, IPDI is a blocked isophorone diisocyanate trimer isocyanurate.

In embodiments herein, the IPDI is present in the coating composition in an amount of 5-40 wt.%, based on the total weight of components (a), (b), (c), and (d). All individual values and subranges are included and disclosed herein. For example, in some embodiments, the IPDI is present in the coating composition in an amount of from a lower limit of 5, 7.5, 10, 12.5, 15, 17.5, or 20 wt.% to an upper limit of 40, 37.5, 35, 32.5, 30, 27.5, 25, 22.5, or 20 wt.%, based on the total weight of components (a), (b), (c), and (d). In other embodiments, the IPDI is present in the coating composition in an amount of 5-37.5, 5-35, 5-32.5, or 5-30 wt.%, based on the total weight of components (a), (b), (c), and (d). In further embodiments, the IPDI is present in the coating composition in an amount of 7.5-37.5, 7.5-35, 7.5-32.5, or 7.5-30 wt.%, based on the total weight of components (a), (b), (c), and (d). In even further embodiments, the IPDI is present in the coating composition in an amount of 10-37.5, 10-35, 10-32.5, or 10-30 wt.%, based on the total weight of components (a), (b), (c), and (d).

Amino Resin

An amino resin can optionally be used as a crosslinker as long as it has a plurality of --$N(CH_2OR^3)_2$ functional groups, wherein $R^3$ is a C1-C4 alkyl, preferably methyl.

In general, the amino resin may be selected from compounds of the following formulae, wherein $R^3$ is independently a C1-C4 alkyl:

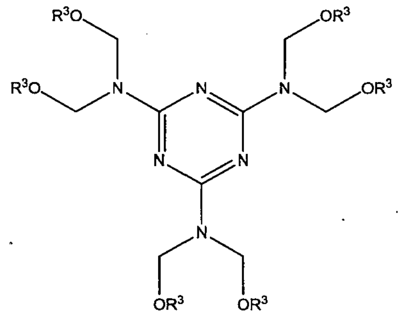

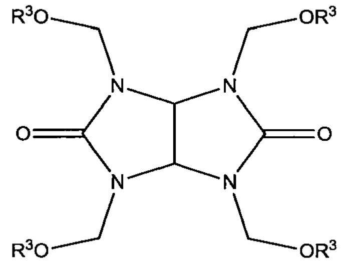

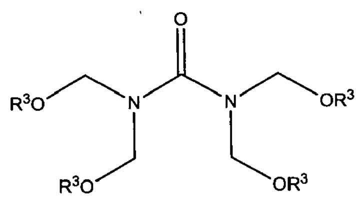

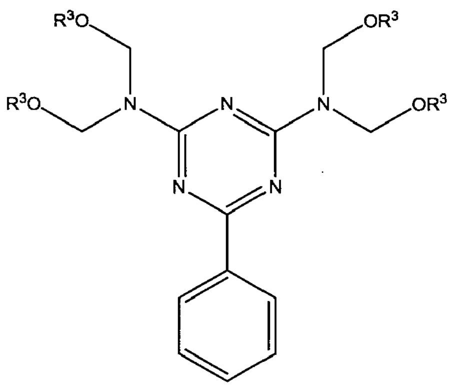

In one or more embodiments herein, the amino resin (d) is selected from the group consisting of melamine-formaldehyde resin, benzoguanamine-formaldehyde resin, or mixtures thereof. In other embodiments, the amino resin (d) is a benzoguanamine-formaldehyde resin.

Examples of melamine-formaldehyde or benzoguanamine-formaldehyde resins include hexamethoxymethylmelamine, hexabutoxymethylmelamine, tetramethoxymethylbenzoguanamine, tetrabutoxymethylbenzoguanamine, tetramethoxymethylurea, mixed butoxy/methoxy substituted melamines, and the like.

In embodiments herein, the amino resin (d) may be present in the coating composition in an amount of 0-40 wt.%, based on the total weight of components (a), (b), (c), and (d). All individual values and subranges are included and disclosed herein. For example, in some embodiments, the amino resin is present in the coating composition in an amount of from a lower limit of 0, greater than 0, 0.5, 1, 1.5, 2, 2.5, 4, 5, 7.5, 10, 12.5, 15, 17.5, 20, 22.5, 25 or 30 wt.% to an upper limit of 40, 37.5, 35, 32.5 30, 27.5, 25, 22.5, 20, 17.5, 15, 12.5, 10, 7.5, 5, 4, or 3 wt.%, based on the total weight of components (a), (b), (c), and (d). In other embodiments, the amino resin is present in the coating composition in an amount of 0-15, greater than 0 to 15, 0-10, greater than 0 to 10, 0-7.5, greater than 0 to 7.5, 0-5, or greater than 0 to 5 wt.%, based on the total weight of components (a), (b), (c), and (d). In further embodiments, the amino resin is present in the coating composition in an amount of 5-40, 7.5-40, 10-40, or 15-40 wt.%, based on the total weight of components (a), (b), (c), and (d).

In some embodiments, a benzoguanamine formaldehyde resin is present in the coating composition in an amount of 0-40 wt.%, based on the total weight of components (a), (b), (c), and (d). All individual values and subranges are included and disclosed herein. For example, in some embodiments, the benzoguanamine formaldehyde resin is present in the coating composition in an amount of from a lower limit of 0, greater than 0, 0.5, 1, 1.5, 2, 2.5, 4, 5, 7.5, 10, 12.5, 15, 17.5, 20, 22.5, 25 or 30 wt.% to an upper limit of 40, 37.5, 35, 32.5 30, 27.5, 25, 22.5, 20, 17.5, 15, 12.5, 10, 7.5, 5, 4, 3, or 2.5 wt.%, based on the total weight of components (a), (b), (c), and (d). In other embodiments, the benzoguanamine formaldehyde resin is present in the coating composition in an amount of 0-15, greater than 0 to 15, 0-10, greater than 0 to 10, 0-7.5, greater than 0 to 7.5, 0-5, or greater than 0 to 5 wt.%, based on the total weight of components (a), (b), (c), and (d). In further embodiments, the benzoguanamine formaldehyde resin is present in the coating composition in an amount of 5-40, 7.5-40, 10-40, or 15-40 wt.%, based on the total weight of components (a), (b), (c), and (d).

Coating Composition

All combinations of components (a), (b), (c) and (d) are included and disclosed herein. By way of example only, the coating composition may comprise polyester polyol (a) in an amount of 60 to 85 or 65 to 80 wt.%; the modifying polyester (b) in an amount of 2-15 or 3-10 wt.%; isophorone diisocyanate (IPDI) (c) in an amount of 10 to 35 or 15 to 30 wt.%; and (d) the amino resin in an amount of 0-15 or 0-10 wt.%, based on the total weight of components (a), (b), (c), and (d).

The coating composition may optionally further include one or more cross-linking catalysts. Representative crosslinking catalysts may include carboxylic acids, sulfonic acids, tertiary amines, tertiary phosphines, tin compounds, or combinations of these compounds. Some specific examples of crosslinking catalysts include , FASCAT™ 4202 (dibutyltin dilaurate), FASCAT™ 4200 (dibutyltin diacetate, both available from Arkema), DABCO™ T-12 (available from Air Products) and K-KAT™ 348, 4205, 5218, XC-6212 non-tin catalysts (available from King Industries), and tertiary amines, p-toluenesulfonic acid, phosphoric acid, NACURE™ 155, 5076, 1051, and XC-296B catalysts sold by King Industries, BYK 450, 470, available from BYK-Chemie U.S.A., methyl tolyl sulfonimide, p-toluenesulfonic acid, dodecylbenzene sulfonic acid, dinonylnaphthalene sulfonic acid, and dinonylnaphthalene disulfonic acid, benzoic acid, triphenylphosphine, dibutyltindilaurate, and dibutyltindiacetate.

The crosslinking catalyst can depend on the type of crosslinker that is used in the coating composition. For example, if the crosslinker comprises an amino resin, then the crosslinking catalyst may comprise p-toluenesulfonic acid, phosphoric acid, unblocked and blocked dodecylbenzene sulfonic (abbreviated herein as "DDBSA"), dinonylnaphthalene sulfonic acid (abbreviated herein as "DNNSA") and dinonylnaphthalene disulfonic acid (abbreviated herein as "DNNDSA"). Some of these catalysts are available commercially under trademarks such as, for example, NACURE™ 155, 5076, 1051, 5225, and XC-296B (available from King Industries), BYK-CATALYSTS™ (available from BYK-Chemie USA), and CYCAT ™ catalysts (available from Cytec Surface Specialties). If one or more isocyanate crosslinking catalysts such as, for example, FASCAT™ 4202 (dibutyltin dilaurate), FASCAT™ 4200 (dibutyltin diacetate, both available from Arkema), DABCO™ T-12 (available from Air Products) and K-KAT™ 348, 4205, 5218, XC-6212 non-tin catalysts (available from King Industries), and tertiary amines.

The coating composition can contain an acid or base catalyst in an amount ranging from 0.1 to 2 weight %, based on the total weight of any of the aforementioned curable polyester resins and the crosslinker composition.

In another embodiment, the coating composition may further comprise one or more organic solvents. Suitable organic solvents may include xylene, ketones (for example, methyl amyl ketone), 2-butoxyethanol, ethyl-3-ethoxypropionate, toluene, butanol, cyclopentanone, cyclohexanone, ethyl acetate, butyl acetate, Aromatic 100 and Aromatic 150 (both available from ExxonMobil), and other volatile inert solvents typically used in industrial baking (i.e., thermosetting) enamels, mineral spirits, naptha, toluene, acetone, methyl ethyl ketone, methyl isoamyl ketone, isobutyl acetate, t-butyl acetate, n-propyl acetate, isopropyl acetate, methyl acetate, ethanol, n-propanol, isopropanol, sec-butanol, isobutanol, ethylene glycol monobutyl ether, propylene glycol n-butyl ether, propylene glycol methyl ether, propylene glycol monopropyl ether, dipropylene glycol methyl ether, diethylene glycol monobutyl ether, trimethylpentanediol mono-isobutyrate, ethylene glycol mono-octyl ether, diacetone alcohol, 2,2,4-trimethyl-1,3-pentanediol monoisobutyrate (available commercially from Eastman Chemical Company under the trademark TEXANOL™), or combinations thereof.

In one or more embodiments herein, the amount of organic solvents present in the coating composition, may be at least 20 wt.%, or at least 25 wt.%, or at least 30 wt.%, or at least 35 wt.%, or at least 40 wt.%, or at least 45 wt.%, or at least 50 wt.%, or at least 55 wt.%, and up to 85 wt.%, up to 80 wt.%, up to 75 wt.%, up to 70 wt.%, up to 65 wt.%, or up to 60 wt.%, based on the total weight of a solvent containing coating composition.

In one or more embodiments herein, the coating composition may comprise at least one pigment. The pigment may be present in an amount of 10 to 60 weight percent, based on the total weight of the coating composition. All individual values and subranges are included and disclosed herein. For example, in some embodiments, the coating composition may comprise at least one pigment in an amount from 10, 15, 20, 22.5, or 25 to 60, 55, 50, 45, 40, 35, or 30 weight percent, based on the total weight of the coating composition. Examples of suitable pigments include titanium dioxide, barytes, clay, calcium carbonate, and CI Pigment White 6 (titanium dioxide). For example, the solvent-borne, coating formulations can contain titanium dioxide as the white pigment available from CHEMOURS as Ti-PureTM R 900. In some embodiments, the coating composition comprises a titanium dioxide white pigment in an amount of 10 to 40 wt.% (alternatively, 20-40 or 20-30 wt.%) based on the total weight of the coating composition.

In one or more embodiments herein, the coating composition may have an Enamel Rating of less than or equal to 25 mA (alternatively, less than or equal to 22.5 mA or 0-22.5 mA, less than or equal to 20 mA or 0- 20 mA, or less than or equal to 15 mA or 0-15 mA), as measured by the method of microcracking (porosity) test. In one or more embodiments herein, the coating composition may have an MEK double rubs of greater than or equal to 80 (alternatively, greater than or equal to 85 or 85-100, greater than or equal to 87.5 or 87.5-100, or greater than or equal to 90 or 90-100) as measured by the method of ASTM D7835. In one or more embodiments herein, the coating composition may have an Enamel Rating of less than or equal to 25 mA (alternatively, less than or equal to 22.5 mA or 0-22.5 mA, less than or equal to 20 mA or 0- 20

mA, or less than or equal to 15 mA or 0-15 mA) as measured by the method of microcracking (porosity) test and an MEK double rubs of greater than or equal to 85 or 85-100, greater than or equal to 87.5 or 87.5-100, or greater than or equal to 90 or 90-100) as measured by the method of ASTM D7835.

After formulation, the coating composition can be applied to a substrate or article. Thus, a further aspect of the present invention is a shaped or formed article that has been coated with the coating compositions described herein. The substrate can be any common substrate, such as aluminum, tin, steel or galvanized sheeting; urethane elastomers; primed (painted) substrates; and the like. The coating composition can be coated onto a substrate using techniques known in the art, for example, by spraying, draw-down, roll-coating, etc., at a thickness of about 0.1 to about 4 mils (1 mil = 25 $\mu$m), or 0.5 to 3, or 0.5 to 2, or 0.5 to 1 mils of wet coating onto a substrate. The coating can be cured at a temperature of about 50°C to about 230°C, for a time period that ranges from about 5 seconds to about 90 minutes and allowed to cool. Examples of coated articles include metal cans for food and beverages, in which the interiors are coated with the coating composition described herein.

TEST METHODS

Glass Transition Temperature (Tg)

Tg was determined using a Q2000 differential scanning calorimeter (DSC) from TA Instruments, New Castle, DE, US, at a scan rate of 20°G/min.

Molecular Weight

Number average molecular weight (Mn) and weight average molecular weight (Mw) Mn were measured by gel permeation chromatography (GPC) using polystyrene equivalent molecular weight.

Acid Number

**[0056]** Acid number was measured by using a procedure based on ASTM D7253-1 entitled "Standard Test Method for Polyurethane Raw Materials: Determination of Acidity as Acid Number for Polyether Polyols."

Hydroxyl Number

**[0057]** Hydroxyl number was measured using a procedure based on ASTM E222-1 entitled "Standard Test Methods for Hydroxyl Groups Using Acetic Anhydride."

Coating Test Methods: Substrate, Coated Test Panel Preparation, Film Weight

Electrolytic Tinplate (ETP) substrate panels were supplied by Reynolds Metals Company - 0.19 mm thickness, 2.2 g/$m^2$ tin content, temper, and annealing type DR-8CA. The substrates were coated by casting wet films with wire wound rods, RDS 14-16 for pigmented (RDS 14, 15 and 16 are available from R.D. Specialties, Inc.). This yielded a final dry film weight of approximately 14 - 16 grams/$m^2$ for pigmented coatings. The cast panels were placed in a rack to hold them vertically in an oven for cure. A Despatch forced air oven was preheated to a setting temperature of 210 °C. The coated panels in a rack were then placed into the oven for 15 minutes of bake cycle time in order to allow the coatings to be baked at 195 °C Peak Metal Temperature (PMT) for 10 minutes. In conclusion of baking cycle, the panel rack was removed from oven and allowed to cool back to ambient conditions. A Sencon SI9600 coating thickness gauge was used to confirm the dry film weight of the applied coatings.

Wedge Bend (WB) Testing

A coupon measuring 1.25" wide$\times$4" long was cut from the coated panel as described above. This coupon was tested by a Gardco coverall bend and impact tester following ASTM D 3281. To make a bend test, the coated coupon was first bent over the 1/8" (0.32 cm) steel rod. The bent coupon was placed between the parts of a butt hinge. The hinge made of two steel blocks is attached to the base below the guide tube. When the hinge is closed, it creates a wedge shape gap between the upper and lower parts ranging from 1/8" at the hinged end to zero thickness at the free end. Then the impact tool, flat face down, was dropped from a height of one or two feet onto the upper part of the hinge. Once coated coupon was bent and impacted into a wedge shape, it was then soaked in an acidified copper sulfate solution (5 wt.% copper sulfate, 15 wt.% hydrochloric acid (35%), 80 wt.% distilled water) for 5 minutes to make any coating cracking visible. Excess copper sulfate solution was removed by washing with water and blotting with a dry towel. Wedge bend failure (mm) measured by

using a ruler and a lighted magnifying glass is defined as the total length of continuous crack along the bent edge of the coupon. The result is reported as Pass % of wedge bend which is calculated by:

$$\text{Pass \% of wedge bend} = \frac{(\text{Total length} - \text{wedge bend failure})}{\text{Total length}} \times 100\%$$

Each Pass % of wedge bend in this experiment is an average value from 3 replicates.

Methyl Ethyl Ketone (MEK) Double Rubs

The resistance to MEK solvent was measured using a MEK rub test machine (Gardco MEK Rub Test Machine AB-410103EN with 1 kg block). This test was carried out similar to ASTM D7835. MEK solvent resistance was reported as the number of double rubs a coated panel can take before the coating starts to be removed. For example, one back-and-forth motion constitutes one double rub. A maximum of 100 double rubs was set as the upper limit for each evaluation.

Micro-cracking Test (Porosity Test)

For the microcracking test method, the coating film weight is approximate 10 grams/$m^2$. Enamel rating (ER) is a test that checks the integrity of internal coatings applied to metal packaging as described above. The sample with a higher ER value indicates more microcracks/porosities in the coatings. The procedure involved using a coated tin plate panel with a stamped sanitary end diameter of 73mm. The initial enamel rating was measured on the end after 6.3V applied for 4 second. (using Sencon SI9100 semi-auto enamel rater with Innosen IS9020 TMR End adapter). Following this, the sanitary ends were exposed to an acidified copper sulfate solution consisting of 16 wt.% copper sulfate, 5 wt.% hydrochloric acid (35%), and 79 wt.% distilled water for a duration of 20 minutes. The end was then rinsed, and the final enamel rating value was measured. A final ER value below 30mA, preferably lower than 25mA, and most preferably lower than 20mA indicates a low to no presence of microcracking.

EXAMPLES

The following specific examples are given to illustrate the process and performance properties associated with polyester polyols. The inventive and comparative examples are provided below with the details of the formulations and results are provided in the following tables.

**Table 1 - Materials**

| | | |
|---|---|---|
| Titanium Dioxide (TiO2) | White pigment | Ti-Pure™ R-900 available from Chemours. |
| Isophorone diisocyanate | Crosslinker | Desmodur® BL 2078/2 available from Covestro AG. |
| Carnauba wax | Wax | Lanco™ Glidd 4415 available from Lubrizol. |
| Polyacrylate defoamer | Additive | BYK-392 available from BYK. |
| Butyltin tris-2-ethylhexanoate catalyst | Catalyst | Fascat 9102 - 10% in A100 available from PMC Organometallix. |
| Polyester Resin | Adhesion promotor | TEGO® AddBond LTW available from Evonik. |
| 30 wt.% Xylene, 30 wt.% Butanol, 40 wt.% MAK (methyl amyl ketone) | Solvent Blend | available from Eastman. |

Example 1: Synthesis of Modifying Polyester - Modifying Resins 1-4 (MR-1 to MR-4)

The resins were produced on a 1 kg scale (except for MR 1, which was produced on a 500 lbs. scale) using a 2 L kettle with overhead stirring and a partial condenser topped with total condenser and Dean Stark trap. Approximately 10 wt% (based on reaction yield) azeotroping solvent of high boiling point (A150ND or xylene) was used to both encourage egress of the water condensate out of the reaction mixture and keep the reaction mixture viscosity at a reasonable level using the standard paddle stirrer. Monomers used included isophthalic acid (IPA), terephthalic acid (TPA), adipic acid (AD), sebacic acid (SA), 1,4-cyclohexane dimethanol (CHDM), 2,2,4,4-tetramethylcyclobutanediol (TMCD), 2-methyl-1,3-propanediol (MP Diol), trimethylolpropane (TMP), and neopentyl glycol (NPG). The monomers (holding back half the

TMP), solvent, and a solution of titanium isopropoxide (TTIP) dissolved in butanol at 15% w/w Ti or FASCAT 4100 were added to the reactor, which was then completely assembled. The reactor was then blanketed with nitrogen for the reaction. Additional solvent was added to the Dean Stark trap to maintain the -10 wt% solvent level in the reaction kettle. The reaction mixture was heated without stirring from room temperature to 150 °C using a set output controlled through the automation system. Once the reaction mixture was fluid enough, the stirring was started to encourage even heating of the mixture. At 150 °C, the control of heating was switched to automated control and the temperature was ramped to 220 °C over the course of 4 h. After about half of the total theoretical amount of water comes off (around 180 °C), the remaining TMP was added carefully via the sampling port. Once the reaction temperature reached 220 °C, it was held and sampled every 0.5-1 h until the desired acid value was reached. The reaction mixture was then further diluted with solvent to target a weight percent solid of 65-75%. This solution was filtered through a ~250 μm paint filter prior to use in the formulation and application testing. The glycol excesses were determined empirically for the lab reactor and may be different depending on the partial condenser and reactor design used.

Table 1. The composition of MR-1

| Raw Material | Moles | Functional Group Equivalents | Weight (lbs) | Charge Weight (including excess) | % Excess |
|---|---|---|---|---|---|
| Adipic Acid | 702 | 1404 | 226.1 | **226.1** | 0 |
| TMCD | 253 | 506 | 80.3 | **80.3** | 0 |
| NPG | 255 | 510 | 58.5 | **58.5** | 0 |
| TMP | 155 | 465 | 45.8 | **45.8** | 0 |
| | | ***Total Charge*** | 410.7 | | |
| | | | | | |
| **(Catalyst)** | | | | | |
| FASCAT 4100 | | | 51.5 (g) | **51.5 (g)** | |
| | | | | | |
| **(Process Solvent)** | **Wt. %** | | | | |
| Xylene | 10 | | 41.7 | | |
| | | | | | |
| **(Dilution Solvent)** | **Final Wt. %** | | | | |
| A150ND | 75 | | 61.0 | | |

Table 2. The composition of MR-2

| Raw Material | Moles | Functional Group Equivalents | Weight (g) | Charge Weight (including excess) | % Excess |
|---|---|---|---|---|---|
| Adipic Acid | 3.5000 | 7.0000 | 511.35 | **511.35** | 0 |
| TMCD | 1.2750 | 2.5500 | 183.87 | **198.58** | 8 |
| 1,4-CHDM | 1.2750 | 2.5500 | 183.87 | **183.87** | 0 |
| TMP | 1.5629 | 4.6887 | 209.70 | **220.18** | 5 |
| | | ***Total Charge*** | 1088.78 | | |
| | ***Minus Condensate*** | | 123.04 | | |
| | | ***Yield*** | 965.75 | | |
| | | | | | |
| **(Catalyst)** | **Concentration** | | | | |
| TTIP/Butanol | 160 | | 1.514mL | 1.32 | |
| | | | | | |

(continued)

| **(Process Solvent)** | **Wt. %** | | | | |
|---|---|---|---|---|---|
| A150ND | 10 | | | **123.92** | |
| | | | | | |
| **(Dilution Solvent)** | **Final Wt. %** | | | | |
| A150ND | 75 | | | **247.84** | |

Table 3. The composition of MR-3

| Raw Material | Moles | Functional Group Equivalents | Weight (g) | Charge Weight (including excess) | % Excess |
|---|---|---|---|---|---|
| Sebacic Acid | 3.5000 | 7.0000 | 708.05 | **708.05** | 0 |
| TMCD | 1.3645 | 2.7291 | 196.78 | **212.52** | 8 |
| 1,4-CHDM | 1.3645 | 2.7291 | 196.78 | **196.78** | 0 |
| TMP | 1.6727 | 5.0180 | 224.42 | **235.64** | 5 |
| | | ***Total Charge*** | 1326.03 | | |
| | ***Minus Condensate*** | | 122.27 | | |
| | | ***Yield*** | 1203.75 | | |
| | | | | | |
| **(Catalyst)** | **Concentration** | | | | |
| TTIP/butanol | 160 | | | **1.33** | |
| | | | | | |
| **(Process Solvent)** | **Wt. %** | | | | |
| A150ND | 10 | | | **150.44** | |
| | | | | | |
| **(Dilution Solvent)** | **Final Wt. %** | | | | |
| A150ND | 70 | | | **429.82** | |

Table 4. The composition of MR-4

| Raw Material | Moles | Functional Group Equivalents | Weight (g) | Charge Weight (including excess) | % Excess |
|---|---|---|---|---|---|
| Sebacic Acid | 2.6600 | 5.3200 | 538.12 | **538.12** | 0 |
| PIA | 1.1400 | 2.2800 | 189.39 | **189.39** | 0 |
| TMCD | 0.8261 | 1.6523 | 119.14 | **128.67** | 8 |
| 1,4-CHDM | 1.2392 | 2.4784 | 178.71 | **178.71** | 0 |
| MP Diol | 1.2392 | 2.4784 | 111.65 | **111.65** | 0 |
| TMP | 0.8261 | 2.4784 | 110.84 | **116.39** | 5 |
| | | ***Total Charge*** | 1247.85 | | |
| | ***Minus Condensate*** | | 135.16 | | |
| | | ***Yield*** | 1112.68 | | |

(continued)

| Raw Material | Moles | Functional Group Equivalents | Weight (g) | Charge Weight (including excess) | % Excess |
|---|---|---|---|---|---|
| | | | | | |
| **(Catalyst)** | **Concentration** | | | | |
| TTIP/butanol | 160 | | | **1.24** | |
| | | | | | |
| **(Process Solvent)** | **Wt. %** | | | | |
| A150ND | 10 | | | **140.46** | |
| | | | | | |
| **(Dilution Solvent)** | **Final Wt. %** | | | | |
| A150ND | 70 | | | **401.32** | |

Example 2: Synthesized Modifying Polyester Compositions and Their Properties

Table 5 lists the compositions of Resins 1-4, and Table 6 lists their resin properties.

Table 5. Synthesized Modifying Polyester Resins

| | Resin Composition as Charged | | | | | | | |
|---|---|---|---|---|---|---|---|---|
| | Mole Ratio Based on Total Hydroxy Components (%) | | | | | Mole Ratio Based on Total Acid Components (%) | | |
| Modifying Resin | TMCD | 1,4-CHDM | MPdiol | TMP | NPG | IPA | Sebacic acid | AD |
| MR 1 | 31 | | | 38 | 31 | | | 100 |
| MR 2 | 31 | 31 | | 38 | | | | 100 |
| MR 3 | 31 | 31 | | 38 | | | 100 | |
| MR 4 | 20 | 30 | 30 | 20 | | 30 | 70 | |

Table 6. Resin Properties of Modifying Polyesters

| Modifying Resin | Tg, °C | Mn | Mw | Acid Number Analyzed | OH Number Analyzed |
|---|---|---|---|---|---|
| MR 1 | -29 | 3000 | 30000 | 7 | 172 |
| MR 2 | -27 | 2232 | 7840 | 6 | 240 |
| MR 3 | -41 | 1492 | 6593 | 8.6 | 168 |
| MR 4 | -29 | 2317 | 10415 | 15 | 86 |

Example 3: Synthesis of Comparative Modifying Polyester - Comparative Modifying Resins 1-3 (CMR-1 to CMR-3)

Table 6. The composition of CMR-1

| Raw Material | Moles | Functional Group Equivalents | Weight (g) | Charge Weight (including excess) | % Excess |
|---|---|---|---|---|---|
| Adipic Acid | 3.1500 | 6.3000 | 460.22 | **460.22** | 0 |

(continued)

| Raw Material | Moles | Functional Group Equivalents | Weight (g) | Charge Weight (including excess) | % Excess |
|---|---|---|---|---|---|
| PTA | 0.3500 | 0.7000 | 58.15 | **58.15** | 0 |
| TMCD | 1.2553 | 2.5107 | 181.03 | **193.71** | 7 |
| NPG | 1.2553 | 2.5107 | 130.81 | **130.81** | 0 |
| TMP | 1.5388 | 4.6164 | 206.46 | **216.78** | 5 |
| | | ***Total Charge*** | 1036.66 | | |
| | | ***Minus Condensate*** | 123.21 | | |
| | | ***Yield*** | 913.46 | | |
| | | | | | |
| **(Catalyst)** | **Concentration** | | | | |
| TTIP/Butanol | 160 | | 1.445mL | **1.26** | |
| | | | | | |
| **(Process Solvent)** | **Wt. %** | | | | |
| A150ND | 10 | | | **117.88** | |
| | | | | | |
| **(Dilution Solvent)** | **Final Wt. %** | | | | |
| A150ND | 75 | | | **235.76** | |

Table 7. The composition of CMR-2

| Raw Material | Moles | Functional Group Equivalents | Weight (g) | Charge Weight (includin g excess) | % Excess |
|---|---|---|---|---|---|
| Adipic Acid | 3.5000 | 7.0000 | 511.35 | **511.35** | 0 |
| TMCD | 1.5109 | 3.0219 | 217.89 | **233.14** | 7 |
| NPG | 1.5109 | 3.0219 | 157.44 | **157.44** | 0 |
| TMP | 0.7555 | 2.2664 | 101.36 | **106.43** | 5 |
| | | ***Total Charge*** | 988.04 | | |
| | ***Minus Condensate*** | | 123.36 | | |
| | | ***Yield*** | 864.68 | | |
| | | | | | |
| **(Catalyst)** | **Concentration** | | | | |
| TTIP/Butanol | 160 | | 1.388mL | **1.20** | |
| | | | | | |
| **(Process Solvent)** | **Wt. %** | | | | |
| A150ND | 10 | | | **112.17** | |
| | | | | | |
| **(Dilution Solvent)** | **Final Wt. %** | | | | |
| A150ND | 75 | | | **224.35** | |

Table 8. The composition of CMR-3

| Raw Material | Moles | Functional Group Equivalents | Weight (g) | Charge Weight (including excess) | % Excess |
|---|---|---|---|---|---|
| Adipic Acid | 3.5000 | 7.0000 | 511.35 | **511.35** | 0 |
| TMCD | 1.0973 | 2.1946 | 158.24 | **170.90** | 8 |
| 1,4-CHDM | 1.0973 | 2.1946 | 158.24 | **158.24** | 0 |
| TMP | 1.3451 | 4.0352 | 180.47 | **189.49** | 5 |
| | | ***Total Charge*** | 1008.30 | | |
| | | ***Minus Condensate*** | 120.44 | | |
| | | ***Yield*** | 887.86 | | |
| | | | | | |
| **(Catalyst)** | **Concentration** | | | | |
| TTIP/Butanol | 160 | | 1.160mL | **1.01** | |
| | | | | | |
| **(Process Solvent)** | **Wt. %** | | | | |
| A150ND | 10 | | | **114.58** | |
| | | | | | |
| **(Dilution Solvent)** | **Final Wt. %** | | | | |
| A150ND | 65 | | | **440.68** | |

Table 10. Synthesized Comparative Modifying Polyester Polyols

| | Resin Composition as Charged | | | | | | | |
|---|---|---|---|---|---|---|---|---|
| | Mole Ratio Based on Total Hydroxy Components (%) | | | | | Mole Ratio Based on Total Acid Components (%) | | |
| Modifyi ng Resin | TMCD | CHDM | MPdiol | TMP | NPG | TPA | Sebacic acid | AD |
| CMR1 | 31 | | | 38 | 31 | 10 | | 90 |
| CMR2 | 40 | | | 20 | 40 | | | 100 |
| CMR3 | 31 | 31 | | 38 | | | | 100 |

Table 11. Resin Properties of Comparative Modifying Polyester Polyols

| Comparative Modifying Resin | Tg, °C | Mn | Mw | Acid Number Analyzed | OH Number Analyzed |
|---|---|---|---|---|---|
| CMR1 | -24 | 2800 | 15740 | 3.9 | 165 |
| CMR2 | -31 | 2898 | 23156 | 3.5 | 102 |
| CMR3 | -21 | 2668 | 21332 | 24.8 | 130 |

Example 4: Synthesis of TMCD Polyester (Resin 1)

Using the same method as described in Example 1, a TMCD polyester having the composition listed in Table 12 was prepared. Table 13 lists its resin properties.

Table 12. Synthesized TMCD Polyester

| | Resin Composition as Charged | | | | | |
|---|---|---|---|---|---|---|
| | Mole Ratio Based on Total Hydroxy Components (%) | | | | Mole Ratio Based on Total Acid Components (%) | |
| TMCD Polyest er | TMCD | 1,4-CHDM | MPdiol | TMP | TPA | IPA |
| Resin 1 | 45 | 43 | 10 | 2 | 30 | 70 |

Table 13. Resin Properties of TMCD Polyester

| TMCD Polyester | Tg, °C | Mn | Mw | Acid Number Analyzed | OH Number Analyzed |
|---|---|---|---|---|---|
| Resin 1 | 92 | 10,500 | 42,000 | 4 | 17 |

Example 5: Preparation of White Coating Formulations (WF1-4)

Coating formulations intended for white color were prepared by using each modifying resin (MR 1-4) and TMCD polyester (Resin 1). The white formulations (WF 1-4) prepared from each modifying resin and TMCD polyester are listed in Table 14. Table 15 lists the coating properties of said formulations.

Prior to formulating, all polyester polyols were diluted in A150 ND. The solvent blends were made from the mixture of xylene, butanol and MAK at 30%, 30% and 40% by weight, respectively. An empty glass jar with a lid was labeled and pre-weighted to record the tare weight. For each formulation, Desmodur® BL 2078/2, Ti-Pure™ R-900, Lanco™ Glidd 4415, FASCAT® 9102, BYK 392, TEGO® AddBond LTW, and the solvent blend were weighed out respectively and added to the resin solution in order. The formulation was then sheared for 10 - 15 minutes at 1500 RPMs with a Cowles blade on a Dispermat™ high speed disperser. Once it was completed, the glass jar containing the formulation was then rolled overnight with slight agitation at ambient conditions.

A food grade approved Desmodur® BL 2078/2 available from Covestro AG was chosen as blocked IPDI trimer crosslinker. A food grade approved Ti-Pure™ R-900 available from Chemours, Lanco™ Glidd 4415 available from Lubrizol, FASCAT® 9102 from PMC Organometallix, BYK-392 from BYK and TEGO® AddBond LTW available from Evonik were chosen as pigment, carnauba wax, butyltin tris-2-ethylhexanoate catalyst, polyacrylate defoamer, and adhesion promotor, respectively.

Table 14. White Coating Formulations Based on Modifying Resins and TMCD Polyester

| Component | Solids/ Active % | WF1 | WF 2-1 | WF 2-2 | WF 2-3 | WF 2-4 | WF3 | WF4 |
|---|---|---|---|---|---|---|---|---|
| | | Wt (g) | Wt (g) | Wt (g) | Wt (g) | wt (g) | Wt (g) | Wt (g) |
| Resin 1 (TMCD Polyester) | 50.0% | 21.60 | 22.80 | 22.32 | 22.32 | 21.60 | 22.80 | 22.80 |
| MR1 (modifying resin) | 75.0% | 1.60 | | | | | | |
| MR2 (modifying resin) | 63.1% | | 0.85 | 1.33 | 1.33 | 1.90 | | |
| MR3 (modifying resin) | 55.9% | | | | | | 1.08 | |
| MR4 (modifying resin) | 67.1% | | | | | | | 0.94 |
| Ti-Pure™ R-900 ($TiO_2$) | 100% | 13.00 | 13.00 | 13.00 | 13.00 | 13.00 | 13.00 | 13.00 |
| Desmodur® BL 2078/2 | 60.0% | 5.00 | 5.00 | 5.00 | 5.00 | 5.00 | 5.00 | 5.00 |
| Lanco™ Glidd 4415 | 15.0% | 2.00 | 2.00 | 2.00 | 2.00 | 2.00 | 2.00 | 2.00 |
| BYK-392 | 52.0% | 0.10 | 0.10 | 0.10 | 0.10 | 0.10 | 0.10 | 0.10 |
| Fascat 9102 - 10% in A100 | 10.0% | 0.45 | 0.45 | 0.45 | 0.45 | 0.45 | 0.45 | 0.45 |
| TEGO® AddBond LTW | 60.0% | 1.50 | 1.50 | 1.50 | | | 1.50 | 1.50 |
| Solvent Blend (Xylene, Butanol, MAK 30/30/40) | 0.0% | 4.75 | 4.30 | 4.30 | 5.80 | 5.95 | 4.07 | 4.21 |
| Total | | 50.00 | 50.00 | 50.00 | 50.00 | 50.00 | 50.00 | 50.00 |

(continued)

| Calculation: | | | | | | | | |
|---|---|---|---|---|---|---|---|---|
| In the total binders (only polyester resins) | | | | | | | | |
| % Polyester polyol on total polyesters | | 90.00 % | 95.00 % | 93.00 % | 93.00 % | 90.00 % | 95.00 % | 95.00 % |
| % low Tg resin on total polyesters | | 10.00 % | 5.00% | 7.00% | 7.00% | 10.00 % | 5.00% | 5.00% |
| In the total solids (binder + crosslinker, excluding TiO2 pigment) | | | | | | | | |
| % Polyester polyol (resin 1) on total binder | 72.00 % | 76.00 % | 74.40 % | 74.40 % | 72.00 % | 76.00 % | 76.00 % | |
| % low Tg resin on total binder | 8.00% | 4.00% | 5.60% | 5.60% | 8.00% | 4.00% | 4.00% | |
| % Polyesters on total binder | 80.00 % | 80.00 % | 80.00 % | 80.00 % | 80.00 % | 80.00 % | 80.00 % | |
| % IPDI on total binder | 20.00 % | 20.00 % | 20.00 % | 20.00 % | 20.00 % | 20.00 % | 20.00 % | |
| In the total solids | | | | | | | | |
| % Total solids (binder + crosslinker, excluding $TiO_2$ pigment) | 30.00 % | 30.00 % | 30.00 % | 30.00 % | 30.00 % | 30.00 % | 30.00 % | |
| % $TiO_2$ in total formulation | 26.00 % | 26.00 % | 26.00 % | 26.00 % | 26.00 % | 26.00 % | 26.00 % | |

Table 15. White Coating Properties

| | MEK DR | WB (% pass) | Chemical resistance | ER test (mA) |
|---|---|---|---|---|
| WF 1 | 100 | 72 | 71% | 16.78 |
| WF 2-1 | 100 | 64 | 80% | 20.91 |
| WF 2-2 | 100 | 69 | 62% | 10.11 |
| WF 2-3 | 100 | 67 | 56% | 23.18 |
| WF 2-4 | 100 | 68 | 63% | 14.35 |
| WF 3 | 100 | 63 | 77% | 23.90 |
| WF 4 | 91 | 68 | 75% | 11.57 |

Comparative Example 6: Preparation of Comparative White Coating Formulations (CWF 1-3)

Coating formulations intended for white color were prepared by using each comparative modifying resin (CMR 1-3) and TMCD polyester (Resin 1). The comparative white formulations (CWF 1-3) prepared from each comparative modifying resin and TMCD polyester are listed in Table 16. Table 17 lists the coating properties of said formulations.

Prior to formulating, all polyester polyols were diluted in A150 ND. The solvent blends were made from the mixture of xylene, butanol and MAK at 30%, 30% and 40% by weight, respectively. An empty glass jar with a lid was labeled and pre-weighted to record the tare weight. For each formulation, Desmodur® BL 2078/2, Ti-Pure™ R-900, Lanco™ Glidd 4415, FASCAT® 9102, BYK 392, TEGO® AddBond LTW, and the solvent blend were weighed out respectively and added to the resin solution in order. The formulation was then sheared for 10 - 15 minutes at 1500 RPMs with a Cowles blade on a DispermatTM high speed disperser. Once it was completed, the glass jar containing the formulation was then rolled overnight with slight agitation at ambient conditions.

A food grade approved Desmodur® BL 2078/2 available from Covestro AG was chosen as blocked IPDI trimer crosslinker. A food grade approved Ti-Pure™ R-900 available from Chemours, Lanco™ Glidd 4415 available from Lubrizol, FASCAT® 9102 from PMC Organometallix, BYK-392 from BYK and TEGO® AddBond LTW available from Evonik were chosen as pigment, carnauba wax, butyltin tris-2-ethylhexanoate catalyst, polyacrylate defoamer, and adhesion promotor,

respectively.

Table 16. White Coating Formulations Based on Comparative Modifying Resins and TMCD Polyester

| Component | Solids/ Active % | CWF 1 | CWF 2 | CWF 3-1 | CWF 3-2 |
|---|---|---|---|---|---|
| | | Weight (g) | Weight (g) | Weight (g) | Weight (g) |
| Resin 1 (TMCD Polyester) | 50.0% | 21.60 | 21.60 | 22.80 | 22.80 |
| CMR1 (modifying resin) | 59.5% | 2.02 | | | |
| CMR 2 (modifying resin) | 66.2% | | 1.81 | | |
| CMR 3 (modifying resin) | 54.9% | | | 1.08 | 1.08 |
| Ti-Pure™ R-900 ($TiO_2$) | 100% | 13.00 | 13.00 | 13.00 | 13.00 |
| Desmodur® BL 2078/2 | 60.0% | 5.00 | 5.00 | 5.00 | 5.00 |
| Lanco™ Glidd 4415 | 15.0% | 2.00 | 2.00 | 2.00 | 2.00 |
| BYK-392 | 52.0% | 0.10 | 0.10 | 0.10 | 0.10 |
| Fascat 9102 - 10% in A100 | 10.0% | 0.45 | 0.45 | 0.45 | 0.45 |
| TEGO® AddBond LTW | 60.0% | | - | | 1.50 |
| Solvent Blend (Xylene, Butanol, MAK 30/30/40) | 0.0% | 5.83 | 6.04 | 5.57 | 4.30 |
| Total | 50.00 | 50.00 | 50.00 | 50.00 | |
| Calculation: | | | | | |
| In the total binders (only polyester resins) | | | | | |
| % Polyester polyol (Resin 1) on total polyesters | 90.00% | 90.00% | 95.00% | 95.00% | |
| % low Tg resin on total polyesters | 10.00% | 10.00% | 5.00% | 5.00% | |
| In the total solids (binder + crosslinker, excluding TiO2 pigment) | | | | | |
| % Polyester polyol (Resin 1) on total solids | 72.00% | 72.00% | 76.00% | 76.00% | |
| % low Tg resin on total solids | 8.00% | 8.00% | 4.00% | 4.00% | |
| % Polyesters on total solids | 80.00% | 80.00% | 80.00% | 80.00% | |
| % IPDI on total solids | 20.00% | 20.00% | 20.00% | 20.00% | |
| In the total solids | | | | | |
| % Total solids (binder + crosslinker, excluding $TiO_2$ pigment) | 30.00% | 30.00% | 30.00% | 30.00% | |
| % $TiO_2$ in total formulation | 26.00% | 26.00% | 26.00% | 26.00% | |

Table 17. White Coating Properties

| | MEK DR | WB (% pass) | Chemical resistance | ER test (mA) |
|---|---|---|---|---|
| CWF 1 | 100 | 72 | 60% | 30.03 |
| CWF 2 | 100 | 66 | 63% | 25.06 |
| CWF 3-1 | 100 | 68 | 71% | 69.10 |
| CWF 3-2 | 100 | 72 | 67% | 28.67 |

As shown in the Tables above, the formulations of the present invention as shown in Table 15 exhibit lower ER test values of less than 25 mA, which indicates little-to-no microcracking, whereas the comparative examples in Table 17 all have high ER test values much greater than 25 mA as compared to the comparative examples.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is

intended to mean "about 40 mm."

Every document cited herein, if any, including any cross- referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

**1.** A metal can for food or beverage products, wherein the metal can has a surface and at least a portion of the surface is coated with a coating composition comprising:

a. a polyester polyol in an amount of 55-90 wt.%, based on the total weight of (a), (b), (c), and (d), wherein the polyester polyol is the reaction product of the monomers selected from the group consisting of:

i. 2,2,4,4-Tetramethyl-1,3-cyclobutanediol (TMCD) in an amount of 25 to 60 mol.%, based on the total moles of (a)(i-iii),
ii. a diol other than TMCD in an amount of 35 to 70 mol.%, based on the total moles of (a)(i-iii),
iii. trimethylolpropane (TMP) in an amount of 0 to 5 mol.%, based on the total moles of (a)(i-iii),
iv. terephthalic acid (TPA) in an amount of 0-55 mol.%, based on the total moles of (a)(iv-vi),
v. isophthalic acid (IPA) in an amount of 30-80 mol.%, based on the total moles of (a)(iv-vi), and
vi. an aliphatic diacid in an amount of 0-35 mol.%, based on the total moles of (a)(iv-vi);

b. a modifying polyester in an amount of 1-20 wt.%, based on the total weight of (a), (b), (c), and (d), wherein the modifying polyester is the reaction product of the monomers selected from the group consisting of:

i. TMCD in an amount of 5-38 mol.%, based on the total moles of (b)(i-iii),
ii. a diol in an amount of 20-50 mol.%, based on the total moles of (b)(i-iii),
iii. trimethylolpropane (TMP) in an amount of 5-50 mol.%, based on the total moles of (b)(i-iii),
iv. an acyclic aliphatic diacid in an amount of 60-100 mol.%, based on the total moles of (b)(iv-v), and
v. isophthalic acid (IPA) in an amount of 0-40 mol.%, based on the total moles of (b)(iv-v); and

c. isophorone diisocyanate (IPDI) in an amount of 5-40 wt.%, based on the total weight of (a), (b), (c), and (d);
d. an amino resin in an amount of 0-40 wt.%, based on the total weight of (a), (b), (c), and (d);

wherein the polyester polyol (a) has a glass transition temperature (Tg) of 50 to 110 °C, acid number of 0 to 10 mgKOH/g, hydroxyl number of 8 to 40 mgKOH/g, number average molecular weight of 5,000 to 20,000 mgKOH/g, and weight average molecular weight of 10,000 to 100,000; and
wherein the modifying polyester (b) has a glass transition temperature (Tg) of -50 to -10 °C, acid number of 0 to 15 mgKOH/g, hydroxyl number of 50 to 300 mgKOH/g, number average molecular weight of 1,000 to 5,000 g/mole, and weight average molecular weight of 5,000 to 50,000 g/mole.

**2.** The metal can of claim 1, wherein the coating has an Enamel Rating of less than 25 mA as measured by the method of microcracking (porosity) test.

**3.** The metal can of claims 1 or 2, wherein the modifying polyester (b) is the reaction product of the monomers selected from the group consisting of:

i. TMCD in an amount of 15-32 mol.%, based on the total moles of (b)(i-iii),
ii. a diol in an amount of 30-40 mol.%, based on the total moles of (b)(i-iii),
iii. trimethylolpropane (TMP) in an amount of 15-40 mol.%, based on the total moles of (b)(i-iii),

iv. an acyclic aliphatic diacid in an amount of 80-100 mol.%, based on the total moles of (b)(iv-v), and
v. isophthalic acid (IPA) in an amount of 0-20 mol.%, based on the total moles of (b)(iv-v).

**4.** The metal can of claims 1-3, wherein the diol other than TMCD (a)(ii) is selected from the group consisting of 1,2-cyclohexanedimethanol, 1,3-cyclohexanedimethanol, 1,4-cyclohexanedimethanol (CHDM), neopentyl glycol (NPG), 2-methyl-1,3-propanediol (MPdiol), 1,6-hexanediol, and mixtures thereof.

**5.** The metal can of claims 1-4, wherein the aliphatic diacid (a)(iv) is selected from the group consisting of sebacic acid, adipic acid, 1,4-cyclohexanedicarboxylic acid and mixtures thereof.

**6.** The metal can of claims 1-5, wherein the diol (b)(ii) is selected from the group consisting of 1,2-cyclohexanedimethanol, 1,3-cyclohexanedimethanol, 1,4-cyclohexanedimethanol (CHDM), neopentyl glycol (NPG), 2-methyl-1,3-propanediol (MPdiol), 1.6-hexanediol, and mixtures thereof.

**7.** The metal can of claims 1-6, wherein the acyclic aliphatic diacid (b)(iv) is adipic acid, sebacic acid, or a mixture thereof.

**8.** The metal can of claims 1-7, wherein the amino resin is a benzoguanamine formaldehyde resin.

**9.** The metal can of claims 1-8, wherein the coating composition comprises polyester polyol (a) in an amount of 60-85 wt.%; the modifying polyester (b) in an amount of 2-15 wt.%; isophorone diisocyanate (IPDI) (c) in an amount of 10-35 wt.%; and the amino resin (d) in an amount of 0-30 wt.%.

**10.** The metal can of claims 1-8, wherein the coating composition comprises polyester polyol (a) in an amount of 65-80 wt.%; the modifying polyester (b) in an amount of 3-10 wt.%; isophorone diisocyanate (IPDI) (c) in an amount of 15-30 wt.%; and the amino resin (d) in an amount of 0-25 wt.%.

**11.** The metal can of claims 1-10, wherein the coating composition further comprises a titanium dioxide white pigment in an amount of 10 to 40 wt.% based on the total weight of the coating composition.

**12.** A metal can for food or beverage products, wherein the metal can has a surface and at least a portion of the surface is coated with a coating composition comprising:

a. a polyester polyol in an amount of 65-80 wt.%, based on the total weight of (a), (b), (c), and (d), wherein the polyester polyol is the reaction product of the monomers selected from the group consisting of:

i. 2,2,4,4-Tetramethyl-1,3-cyclobutanediol (TMCD) in an amount of 25 to 60 mol.%, based on the total moles of (a)(i-iii),
ii. a diol other than TMCD selected from the group consisting of 2-methyl-1,3-propanediol (MPdiol), 1,3-cyclohexanedimethanol, 1,4-cyclohexanedimethanol (CHDM), 1,6-hexanediol, and mixtures thereof in an amount of 35 to 75 mol.%, based on the total moles of (a)(i-iii),
iii. trimethylolpropane (TMP) in an amount of 1 to 5 mol.%, based on the total moles of (a)(i-iii),
iv. terephthalic acid (TPA) in an amount of 0-55 mol.%, based on the total moles of (a)(iv-vi),
v. isophthalic acid (IPA) in an amount of 30-80 mol.%, based on the total moles of (a)(iv-vi), and
vi. an aliphatic diacid selected from the group consisting of sebacic acid, adipic acid, 1,4-cyclohexanedicarboxylic acid and mixtures thereof in an amount of 0-35 mol.%, based on the total moles of (a)(iv-vi);

b. a modifying polyester in an amount of 3-10 wt.%, based on the total weight of (a), (b), (c), and (d), which is the reaction product of the monomers comprising:

i. TMCD in an amount of 5-38 mol.%, based on the total moles of (b)(i-iii),
ii. a diol selected from the group consisting of 1,3-cyclohexanedimethanol, 1,4-cyclohexanedimethanol (CHDM), neopentyl glycol (NPG), 2-methyl-1,3-propanediol (MPdiol), and mixtures thereof in an amount of 20-50 mol.%, based on the total moles of (b)(i-iii),
iii. trimethylolpropane (TMP) in an amount of 5-50 mol.%, based on the total moles of (b)(i-iii),
iv. an acyclic aliphatic diacid, which is adipic acid, sebacic acid, or a mixture thereof in an amount of 60-100 mol.%, based on the total moles of (b)(iv-v), and
v. isophthalic acid (IPA) in an amount of 0-40 mol.%, based on the total moles of (b)(iv-v);

(c) isophorone diisocyanate (IPDI) in an amount of 15-30 wt.% based on the total weight of (a), (b), (c), and (d); and
(d) a benzoguanamine formaldehyde resin in an amount of 0-40 wt.% based on the total weight of (a), (b), (c), and (d);

wherein the polyester polyol (a) has a glass transition temperature (Tg) of 50 to 110 °C, acid number of 0 to 10 mgKOH/g, hydroxyl number of 8 to 40 mgKOH/g, number average molecular weight of 5,000 to 20,000 mgKOH/g, and weight average molecular weight of 10,000 to 100,000; and
wherein the modifying polyester (b) has a glass transition temperature (Tg) of -50 to -10 °C, acid number of 0 to 15 mgKOH/g, hydroxyl number of 50 to 300 mgKOH/g, number average molecular weight of 1,000 to 5,000 g/mole, and weight average molecular weight of 5,000 to 50,000 g/mole.

**13.** The metal can of claim 12, wherein the coating composition further comprises a titanium dioxide white pigment in an amount of 10 to 40 wt.% based on the total weight of the coating composition.

Europäisches Patentamt
European Patent Office
Office européen des brevets

# EUROPEAN SEARCH REPORT

Application Number
EP 24 31 5174

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/374341 A1 (FENG LINQIAN [US] ET AL) 23 November 2023 (2023-11-23)<br>* claims 1-20 *<br>* examples 1-5; tables 1-7 * | 1-13 | INV.<br>C08G63/127<br>C08G63/137<br>C08G63/183<br>C08G63/199<br>C09D167/02<br>C08G18/42<br>C08G18/75 |
| A | US 2024/034905 A1 (FENG LINQIAN [US] ET AL) 1 February 2024 (2024-02-01)<br>* claims 1-20 *<br>* Examples * | 1-13 | |
| A | WO 2022/115268 A1 (EASTMAN CHEM CO [US]) 2 June 2022 (2022-06-02)<br>* claims 1-27 *<br>* Examples * | 1-13 | |

TECHNICAL FIELDS SEARCHED (IPC)

C08G
C09D

The present search report has been drawn up for all claims

1

| Place of search | Date of completion of the search | Examiner |
|---|---|---|
| The Hague | 20 September 2024 | Pouilley, Delphine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 31 5174

This annex lists the patent family members relating to the patent documents cited in the above-mentioned European search report. The members are as contained in the European Patent Office EDP file on
The European Patent Office is in no way liable for these particulars which are merely given for the purpose of information.

20-09-2024

| Patent document cited in search report | Publication date | Patent family member(s) | Publication date |
|---|---|---|---|
| US 2023374341 A1 | 23-11-2023 | CN 116348384 A | 27-06-2023 |
| | | EP 4236745 A1 | 06-09-2023 |
| | | US 2023374341 A1 | 23-11-2023 |
| | | WO 2022093616 A1 | 05-05-2022 |
| US 2024034905 A1 | 01-02-2024 | CN 116438119 A | 14-07-2023 |
| | | EP 4236742 A1 | 06-09-2023 |
| | | US 2024034905 A1 | 01-02-2024 |
| | | WO 2022093613 A1 | 05-05-2022 |
| WO 2022115268 A1 | 02-06-2022 | CN 116710279 A | 05-09-2023 |
| | | EP 4251681 A1 | 04-10-2023 |
| | | IL 303172 A | 01-07-2023 |
| | | JP 2023551280 A | 07-12-2023 |
| | | KR 20230112701 A | 27-07-2023 |
| | | TW 202231743 A | 16-08-2022 |
| | | US 2024018383 A1 | 18-01-2024 |
| | | WO 2022115268 A1 | 02-06-2022 |

EPO FORM P0459

For more details about this annex : see Official Journal of the European Patent Office, No. 12/82